Europäisches Patentamt

European Patent Office

Office européen des brevets

(19)

(11) Publication number : **0 157 537 B2**

(12) **NEW EUROPEAN PATENT SPECIFICATION**

(45) Date of publication of the new patent specification : **11.03.92 Bulletin 92/11**

(51) Int. Cl.⁵ : **B21D 7/08,** B21D 7/12, F16J 9/12

(21) Application number : **85301909.9**

(22) Date of filing : **19.03.85**

(54) **The manufacture of piston rings.**

(30) Priority : **24.03.84 GB 8407712**

(43) Date of publication of application :
**09.10.85 Bulletin 85/41**

(45) Publication of the grant of the patent :
**08.02.89 Bulletin 89/06**

(45) Mention of the opposition decision :
**11.03.92 Bulletin 92/11**

(84) Designated Contracting States :
**DE FR IT SE**

(56) References cited :
EP-A- 0 088 576
CH-A- 354 651
DE-A- 1 948 805
DE-A- 2 551 944
DE-A- 2 838 128
FR-A- 1 145 975
FR-A- 2 517 226
GB-A- 1 138 860
US-A- 2 111 574

(56) References cited :
**LECTURE NOTES IN ECONOMICS AND MATHEMATICAL SYSTEMS, Zürich, CH, 19th-22nd March 1974, vol. 94, pages 88-98. Brochure No. Fi 1.5/0684-H4165 of Wafios Maschinenfabrik GmbH & Co KG, Reutlingen, Germany, "Universal Federwindeautomaten". Springer-Verlag, Berlin, DE ; E. Trostmann et all.: "Numerically controlled bending of metal beams".**

(73) Proprietor : **AE PLC**
**Cawston House Cawston**
**Rugby Warwickshire CV22 7SB (GB)**

(72) Inventor : **Austin, William Peter**
**20 Windsor Road Parkstone**
**Poole Dorset (GB)**
Inventor : **Morrison, William Craig**
**34 Jordan Close**
**Kenilworth Warwickshire (GB)**

(74) Representative : **Knott, Stephen Gilbert et al**
**MATHISEN, MACARA & CO. The Coach House**
**6-8 Swakeleys Road**
**Ickenham Uxbridge Middlesex UB10 8BZ (GB)**

EP 0 157 537 B2

## Description

The invention relates to the manufacture of piston rings and, in particular, piston rings for internal combustion engines.

Piston rings for internal combustion engines are commonly formed of metal in a generally circular profile with two free ends closely adjacent one another (but not touching). Each piston ring is received in an associated groove provided in a piston for the internal combustion engine, where the purpose of the ring is to provide a seal between the piston and an associated cylinder or liner.

For this purpose, the piston ring should seal against the associated cylinder or liner with an even pressure all round the piston ring, the outward pressing force being provided either by natural resilience of the piston ring and/or by an independent spring, possibly assisted by gas pressure behind the piston ring. It will be appreciated that the piston ring is required to provide this even pressure when at an elevated operating temperature. The profile of the piston ring at room temperature will not be the same as the shape of the piston ring at these operating temperatures since the expansion of the piston ring will not be uniform around its circumference because of the presence of the free ends. Further, a piston will have two or more piston rings arranged at axially spaced positions and so there will be a difference between the temperatures at which the various rings operate, and consequently the amount of expansion will differ between these various piston rings.

As a result of this, each piston ring must, when cold, have a predetermined non-circular profile which is such as to ensure that, on expansion, the piston ring gives the required even outward pressure at its particular operating temperature. In general, this profile is an oval shape with the maximum diameter in a direction normal to the plane containing the gap and the piston ring axis and with the ends of the piston ring directed inwardly towards one another. If a certain "mean" such profile is assumed, piston rings operating in a hotter environment will generally have the ends directed further in towards one another, so-called "negative ovality", and piston rings operating in a cooler environment will have their ends directed inwardly less than the mean, a so-called "positive ovality".

Piston rings can be produced by a number of methods.

One such method is by bending a metal strip into a required profile, by the use of cam-controlled rollers, and then separating the profile so produced to form piston rings. A machine for performing such a method is described in FR-A-2517226 where the profile of the piston ring is determined by a cam whose shape is transferred to the steel strip by a cam-follower and a pair of rollers whose position adjusts to vary the curvature imparted to the steel strip.

Cams have the advantage that they can allow very high rates of production of piston rings. For example, the production of piston rings using cams is much quicker than other conventional methods of production of piston rings such as casting a cylinder of material, cutting the cylinder in planes normal to the axis thereof and then finish machining the rings so produced. Thus the use of cams to bend strips has found wide application in the production of piston rings.

The use of a cam has, however, a number of disadvantages. First, a different cam is required for each profile of piston ring and, as explained above, many different profiles of piston ring are needed. In addition, cams are subject to wear and so there can be a loss of accuracy due to such wear and a need to replace cams at regular intervals. Further, a fresh cam must be produced each time a new profile of piston ring is required and these cams must be machined to a very high accuracy. Thus it is not possible to vary the profile of a piston ring quickly and easily.

A different method of producing piston rings, which comprises the features of the pre-characterizing part of claim 1, is known from DE-A-2838128.

According to the invention, there is provided a machine for producing from a metal strip, piston rings having a predetermined non-circular profile for internal combustion engines, comprising a pair of feed rollers for advancing the metal strip from a supply, at least two guides for guiding the metal strip in a path in which the strip is formed by the guides into a generally circular profile, which is then separated from the remainder of the strip to form a piston ring, at least one of said guides being movable relatively to the other guide or guides during said formation of a piston ring to vary the profile, of the strip around the piston ring, a control system being provided for producing digital signals corresponding to a required piston ring profile, the digital signals controlling the movement of said at least one movable guide during formation of a piston ring having the required non-circular profile therearound, characterized in that said at least two guides comprise a fixed guide arrangement for guiding in a straight line metal strip advanced thereto by the feed rollers, an adjustable guide for imparting a fixed curvature to metal strip advanced thereto by the fixed guide arrangement said fixed curvature being a maximum curvature, said at least one movable guide acting radially outwardly on the metal strip advanced thereto by the adjustable guide under the control of the control system to decrease the curvature of the metal strip in accordance with the required non-circular profile of the piston ring, the control system including profile data which defines the required alteration in curvature of the ring relative to said fixed curvature at successive spaced positions around the ring, an encoder (44) being provided between the adjustable guide (43) and the movable guide (46) for feeding to the control system a signal representing the length of strip that has passed said encoder (44) and the control system outputting control signals to the movable guide (43) in accordance with said length signal.

The following is a more detailed description of some embodiments of the invention, by way of example, reference being made to the accompanying drawings in which:-

Figure 1 is a schematic view of a control system of a machine for producing piston rings from a metal strip, and

Figure 2 is a schematic view of a machine for producing piston rings from a metal strip and having two guides, an adjustable guide and a movable roller for imparting a variable curvature to the strip, the machine being controlled by the control system of Figure 1.

The piston rings are produced from a flat strip of a suitable metal, For example, a steel strip may be used having a composition which is 1% chromium, 1% molybdenum, 0.55% nickel and 0.1% vanadium (all by weight), remainder iron and having a hardness of 500-550 on the Vickers scale. A second material for the strip is a low alloy steel or plain eutectoid carbon steel treated by a patenting process in which a strip of the steel is transformed from an austenitic structure to a finely and uniformly dispersed ferrite-cementite structure in a molten lead or salt bath and then hard drawn through dies.

It is required to form the strip into a piston ring of generally circular profile having two free ends separated by a gap. The precise profile of the ring will vary from ring to ring but in general it will be oval with the longer axis normal to the plane including the gap and the piston ring axis. The ends of the ring will be directed inwardly by a required amount, in order to produce a ring which, when at its individual operating temperature, and under the particular imposed loads encountered by such a piston ring, applies a uniform pressure to the associated cylinder or liner. These profiles can be readily calculated.

It will be appreciated that a piston ring having this shape can be produced from a steel strip by bending the steel strip into a ring, with the curvature imparted to the strip being varied around the ring in such a way as to produce the required ring profile. These variations are very small; for example, the difference between the major and minor axes of the shape may only be 1 or 2 mm.

The purpose of the machine now to be described with reference to the drawings is to impart such a variable curvature to the strip to give the strip a precalculated profile.

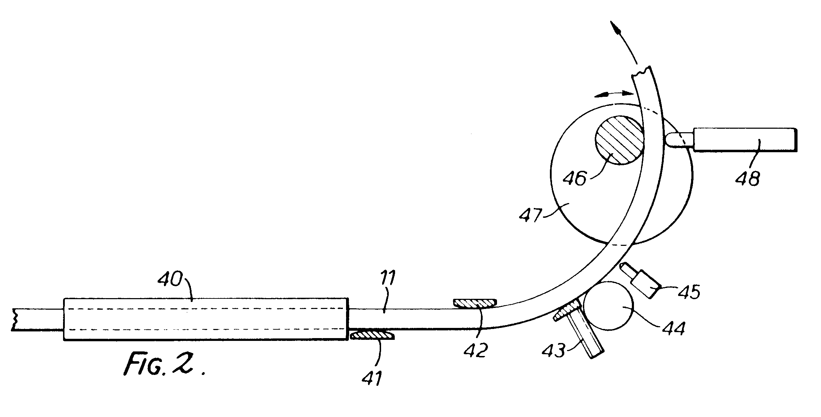

Referring now to Figure 2, in the machine the strip 11 is fed by two rollers, one of which is shown at 40. The strip 11 then engages two fixed guides 41, 42 arranged on opposite sides of the strip 11 and at spaced positions therealong. These guides 41, 42 impart no curvature to the strip 11. Next, in the path of travel of the strip 11, there is an adjustable guide 43 which imparts a fixed curvature to the strip 11 during operation of the machine, but which can be adjusted between operations to alter this imparted curvature. This curvature is the maximum curvature that is required. The strip 11 next contacts a strip length encoder 44 which produces a signal representative of the length of the strip 11 which has passed the encoder. A solenoid indenter 45 is then provided for marking the strip 11 at a predetermined point therealong.

A movable roller 46 then contacts the strip 11 on the opposite side of the strip 11 to the adjustable guide 43. The roller 46 is mounted eccentrically on a shaft 47 which is rotated by an actuator 14 (see Figure 2) controlled by a control system which will be described in more detail below. The rotation of the shaft 47 causes the roller 46 to vary the curvature already imparted by the adjustable guide 43 in accordance with the required piston ring profile data fed to the control system. A sensor 48 acts as a position transducer to provide a feedback signal representative of the position of the roller 46.

The control system is a digital control system and can take a number of forms, For example, it could be a conventional numerical control or computer numerical control device in which information defining required roller positions at various points around the circumference of a piston ring is fed into a computer store and is read in real time to provide electric signals for the actuator 14 which cause the actuator 14 to move the roller 46 to the required positions. In order to ensure the correct positioning of the roller, feedback may be provided.

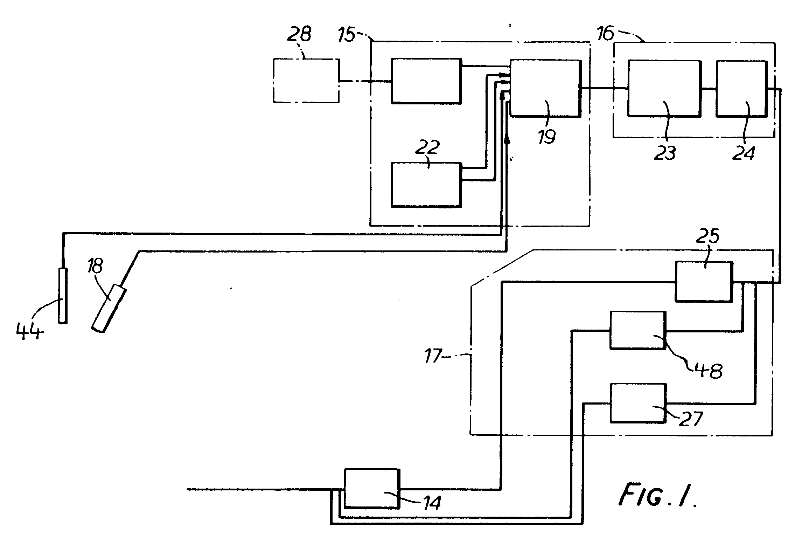

For more complex shapes and for faster production, it may be desirable to employ the control system shown in Figure 1. The control system comprises a computer 15, a signal processor 16 and a roller control system 17. An end detector 18 feeds to the computer a signal when an end of the strip is detected at a datum point and the strip length encoder 44 feeds the computer a signal representative of the length of the strip 11 which has passed the encoder 44.

Prior to the production of piston rings, input profile data is prepared which defines the required curvature of the piston ring at a succession of spaced positions around the ring. This data does not give all the positions of the movable roller 46 around the ring, but gives only, for example, points at which the curvature changes or points at which the curvature changes non-linearly. The profile may, for example, be defined at intervals around the piston ring as drops or decreases from a nominal maximum curvature. Of course, where the piston ring is to be symmetrical about one or more planes including the axis of the piston ring, it is only necessary to define the input data for the initial symmetrical portion. For example, where the piston ring is to be generally oval with a longer axis normal to the plane including the piston ring axis and the gap and is to have inwardly directed ends, only input data for the first half of the piston ring need be defined, because the other half of the piston ring is the same.

The profile data is fed to an input device 28 of the computer 15 and passes from the input device 28 to a store 19 of the computer 15. The computer 15 may be a microprocessor.

The strip 11 is set in movement and the end detector 18 and the strip length encoder 44 feed to the store 19 in real time a digital signal when the end of the strip passes a datum point, and a signal representative of the position of the strip 11 relative to the datum (and thus relative to the movable roller 46).

On receipt of these signals, the computer 15 produces a group of bits corresponding to the required roller position at the point on the strip 11 contacted by the roller 46 at that moment in time; the required position being the roller position necessary to produce the required piston ring profile at that point. The computer 15 does this in the following way. If the strip is defined by 2000 bits of information and is moving at 0.3 metres per second, then, for a piston ring of 100 mm "diameter", and if the position could be required to be changed every 10 minutes of arc, the computer must produce a group of bits every 500 microseconds. Of course, at high speeds and more complex profiles, this time interval may be less than that, for example, it may be 100 microseconds. Since the store 19 cannot, in practice, store all the bits required to define the complete profile of the workpiece, a calculating unit 22 of the computer calculates, before the commencement of strip movement, a few initial groups of bits from the input data held in the store 19 and passes these initial groups to the store 19, from which the initial groups are outputted to the signal preocessor 16, described in more detail below. During the remainder of the 500 microsecond intervals between the groups, the calculating unit 22 produces groups of bits for subsequent future roller positions. The number of groups so produced depends on the time available within each interval and the capacity of the store 19 to hold such groups.

It will be appreciated that the production of these groups from the input data will involve interpolation between the input data, because the groups may be required at intervals which are smaller than the intervals at which the input data is given. In this case, the interpolation is preferably a linear interpolation, although it will be appreciated that the computer could be programmed to produce any other required interpolation. In addition, the computer 15 will be programmed to produce groups for the whole circumferential profile of the piston ring, even where the input data defines only a portion of a symmetrical profile.

It will also be appreciated that, since not all future groups are calculated before the commencement of machining, the store 19 does not require a substantial capacity and the store 19 found in current microprocessors will in most cases be adequate.

The output from the computer 15 is thus a succession of groups of bits defining successive roller positions and produced in real time at intervals determined by signals from the encoder 44. This succession of groups of bits is received by a digital-to-analogue converter 23 of the signal processor 16 which converts each of the succession of groups into a roller arm position signal of constant amplitude corresponding to the value of the associated group of bits. The duration of each such signal is the same as the interval between successive groups.

This output, which is effectively a series of consecutive steps, is fed to a step converter 24 of the signal processor 16. In the step converter 24, the amplitude of each signal is stored until the next succeeding signal is received. As soon as the amplitude of the next succeeding signal has been established, the step converter 24 outputs a continuous signal which has an initial value equal to the value of the next successive signal. Plainly, if there is a difference in amplitude between the two succesive signals, the continuous signal will rise or fall progressively between these initial and final values. This rise or fall may be linear but need not necessarily be so.

The output of the step converter 24 is thus a continuous signal which so changes progressively that at successive time intervals equal to the time intervals of the digital signals, the amplitude of the signal is related to the successive values of the digital signals. This continuous signal can thus be regarded as an analogue of the succession of roller arm position signals representing the required position of the roller at a succession of points around the piston ring.

This continuous signal is fed as an input signal to a feedback control device 25 of the closed-loop continuous roller control system 17. The output of the feedback control device 25 is fed to the actuator (not shown) which moves the shaft 47 in accordance with the output signal. The output of the actuator 14 is monitored by the position transducer 48 and a speed transducer 27 which provide feedback control device 25 which uses these feedback signals to modify the continuous signal from the signal processor 16 in accordance with the feedback signals.

Thus, the computer 15 does not have to deal with the feedback control of the positioning signal. This is done in a purely analogue fashion in a closed-loop control system. This is another factor which allows the computer to be a microprocessor which maintains high strip speeds and allows complex changes of position.

The operation of the step converter 24 produces a time delay in the system. A further time delay is introduced by the inertia of the shaft 47 and the associated roller 46 (although this will be kept to a minimum). In order to ensure that the spatial orientation of the profile is correct, the computer 15 may be programmed so that the datum position from which the roller position signals are calculated, is offset by a distance equal to the time lag in the system. This will bring the profile into the required spatial orientation.

It will be appreciated that the computer 15 can be quickly and simply programmed to produce any required workpiece profile. Indeed, by the provision of an input device in the form of a keyboard, shown in chain dotted line at 28, it is possible to alter the profiles of the piston rings during production.

In the embodiment described above with reference to the drawings, the piston rings may be separated from the strip in a number of ways. One possibility is to halt the feed of the strip 11 when the ring has been formed and then cut the ring from the remaining strip using, for example, a grinding wheel. Alternatively, a number of rings may be formed in succession in a helical coil which is then cut along its length to form the individual rings and to form the gaps between the ends of the rings.

Subsequent to formation of the rings, they can be treated, for example, by nitro-carburising before being used.

## Claims

1. A machine for producing from a metal strip, piston rings having a predetermined non-circular profile for internal combustion engines, comprising a pair of feed rollers (40) for advancing the metal strip (11) from a supply, at least two guides (10; 12; 30; 34; 41, 42, 43; 46) for guiding the metal strip (11) in a path in which the strip is formed by the guides into a generally circular profile, which is then separated from the remainder of the strip to form a piston ring, at least one of said guides (12; 46) being movable relatively to the other guide or guides (10; 30; 34; 41; 42; 43) during said formation of a piston ring to vary the profile, of the strip (11) around the piston ring, a control system (15, 16, 17) being provided for producing digital signals corresponding to a required piston ring profile, the digital signals controlling the movement of said at least one movable guide (12; 46) during formation of a piston ring having the required non-circular profile therearound, characterized in that said at least two guides comprise a fixed guide arrangement (41, 42) for guiding in a straight line metal strip (11) advanced thereto by the feed rollers (40), an adjustable guide (43) for imparting a fixed curvature to metal strip (11) advanced thereto by the fixed guide arrangement (41, 42) said fixed curvature being a maximum curvature, said at least one movable guide (46) acting radially outwardly on the metal strip (11) advanced thereto by the adjustable guide (43) under the control of the control system (15, 16, 17) to decrease the curvature of the metal strip (11) in accordance with the required non-circular profile of the piston ring, the control system including profile data which defines the required alteration in curvature of the ring relative to said fixed curvature at successive spaced positions around the ring, an encoder (44) being provided between the adjustable guide (43) and the movable guide (46) for feeding to the control system a signal representing the length of strip that has passed said encoder (44) and the control system outputting control signals to the movable guide (43) in accordance with said length signal.

2. A machine according to claim 1, characterized in that the control system comprises a computer (15) for producing in each of a succession of time intervals, a signal of constant amplitude corresponding to one of a succession of required positions of said at least one movable guide at one of a corresponding succession of positions around the circumference of the piston ring, a signal processor (16) being provided for producing from the succession of constant amplitude signals, a continuous signal which so changes progressively that at successive time intervals equal to the time intervals of the position signals, the amplitude of the continuous signal is related to the successive values of the position signals, and a closed-loop continuous signal and for controlling the movement of said at least one movable guide in accordance therewith.

3. A machine according to claim 1 or claim 2, characterized in that the computer (15) produces, for each length signal, a group of bits representative of the required guide position for that signal, a digital-to-analogue converter (23) being provided for converting the groups of bits into the guide position signals.

## Patentansprüche

1. Eine Maschine zum Herstellen von ein vorbestimmtes nicht kreisförmiges Profil aufweisenden Kolbenringen für Brennkraftmaschinen aus einem Metallstrang, mit zwei Zuführungsrollen (40) zum vorschieben des Metallstrangs (11) aus einer Zuführungseinrichtung, wenigstens zwei Führungen (10; 12; 30; 34; 41, 42, 43,; 46) zum Führen des Metallstrangs (11) auf einem Weg, auf welchem der Strang durch die Führungen zu einem im wesentlichen kreisförmigen Profil, welches dann von dem Rest des Strangs getrennt wird, um einen Kolbenring zu bilden, geformt wird, wobei wenigstens eine der Führungen (12; 46) relativ zu der anderen Führung oder den anderen Führungen (10; 30; 34; 41; 42; 43) während der Formung eines Kolbenrings bewegbar ist, um das Profil des Strangs (11) um den Kolbenring herum zu variieren, ein Steuersystem (15, 16, 17) zum Erzeugen von digitalen, einem erforderlichen Kolbenringprofil entsprechenden Signalen vorgesehen ist, und wobei die digitalen Signale die Bewegung der wenigstens einen bewegbaren Führung (12; 46) während der Formung eines Kolbenrings, welcher entlang seinem Umfang das erforderliche nicht kreisförmige Profil aufweist, steuern, **dadurch gekennzeichnet,** daß die wenigstens zwei Führungen eine feststehende Führungsanordnung (41, 42) zum Führen des ihr durch die Zuführungsrollen (40) zugeführten Metallstrangs (11) in einer geraden Linie und eine einstellbare Führung (43), um dem durch die feststehende Führungsanordnung (41, 42) zugeführten Metallstrang (11) eine bestimmte Krümmung zu verleihen, umfassen, wobei die bestimmte Krümmung eine Maximalkrümmung ist, die wenigstens eine bewegbare Führung auf dem Metallstrang (11), der ihr durch die einstellbare Führung (43) zugeführt wird unter der Steuerung durch das Steuersystem (15, 16, 17), radial nach außen wirkt, um die Krümmung des Metallstrangs (11) in Übereinstimmung mit dem erforderlichen nicht kreisförmigen Profil des Kolbenrings zu verringern, das Steuersystem Profildaten enthält, welche die erforderliche Änderung der Krümmung des Rings relativ zu der bestimmten Krümmung an aufeinanderfolgenden beabstandeten Positionen um den Ring herum festlegen, ein Kodierer (44) zwischen der einstellbaren Führung (43) und der bewegbaren Führung (46) zum Zuführen eines für die Stranglänge, welche den Kodierer (44) durchlaufen hat, repräsentativen Signals zu dem Steuersystem vorgesehen ist, und wobei das Steuersystem Steuersignale an die bewegbare Führung (46) entsprechend dem Längensignal abgibt.

2. Eine Maschine nach Anspruch 1, **dadurch gekennzeichnet,** daß das Steuersystem einen Computer (15) zum Erzeugen, in jedem Intervall einer Folge von Zeitintervallen, eines Signals konstanter Amplitude, das einer Position aus einer Folge von erforderlichen Positionen der wenigstens einen bewegbaren Führung an einer Position einer entsprechenden Folge von Positionen entlang dem Umfang des Kolbenrings entspricht, umfaßt, wobei ein Signalprozessor (16) zum Erzeugen, aus der Folge von Signalen mit konstanter Amplitude, eines kontinuierlichen Signals, welches sich fortschreitend so ändert, daß in aufeinanderfolgenden Zeitintervallen, die gleich den Zeitintervallen der Positionssignale sind, die Amplitude des kontinuierlichen Signals auf die aufeinanderfolgenden Werte der Positionssignale bezogen ist, und eines kontinuierlichen Regelsignals, und zum Steuern der Bewegung der wenigstens einen bewegbaren Führung in Übereinstimmung mit dem Regelsignal vorgesehen sind.

3. Eine Maschine nach Anspruch 1 oder 2, **dadurch gekennzeichnet,** daß der Computer (15), für jedes Längensignal, eine für die für dieses Signal erforderliche Position der Führung repräsentative Bit-Gruppe erzeugt, und ein Digital/Analogkonverter (23) zum Umwandeln der Bit-Gruppen in die Positionssignale für die Führung vorgesehen ist.

## Revendications

1. Machine de fabrication, à partir d'une bande métallique, de segments de piston ayant un profil prédéterminé non circulaire et destinés à des moteurs à combustion interne, comprenant une paire de galets (40) d'alimentation destinés à faire avancer la bande métallique (11) à partir d'une alimentation, au moins deux guides (10 ; 12 ; 30 ; 34 ; 41, 42, 43 ; 46) destinés à guider la bande métallique (11) suivant un trajet dans lequel la bande est mise en forme par les guides afin qu'elles prenne un profil circulaire de façon générale, la partie profilée étant alors séparée du reste de la bande afin qu'elle forme un segment de piston, l'un des guides au moins (12 ; 46) étant mobile par rapport à l'autre guide ou aux autres guides (10 ; 30 ; 34 ; 41 ; 42, 43) pendant la formation d'un segment de piston afin que le profil de la bande (11) varie autour du segment, un ensemble de commande (15, 16, 17) étant destiné à créer des signaux numériques correspondant à un profil voulu de segment de piston, les signaux numérique commandant le déplacement d'un guide mobile au moins (12 ; 46) pendant la formation d'un segment de piston ayant le profil nécessaire à sa circonférence, caractérisée en ce que deux guides au moins constituent un ensemble fixe (41, 42) de guidage en ligne droite d'une bande métallique (11) qui avance vers lui sous la commande des galets d'avance (40), un guide réglable (43) destiné à donner une courbure fixe à la bande métallique (11) qui avance vers lui sous la commande de l'ensemble fixe (41, 42) de guidage, la courbure fixe étant une courbure maximale, le guide mobile au moins (46) agissant radialement vers l'extérieur sur la bande métallique (11) avançant vers lui par l'intermédiaire du guide réglable (43) sous la commande de l'ensemble de commande (15, 16, 17) afin que la courbure de la bande métallique (11) soit réduite en fonction du profil non circulaire du segment de piston, l'ensemble de commande comprenant des données de profil qui déterminent la modification nécessaire de courbure du segment par rapport à la courbure fixe à des positions successives espacées autour de l'anneau, un codeur (44) étant disposé entre le guide réglable (43) et le guide mobile (46) afin qu'il transmette à l'ensemble de commande un signal représentant la longueur de bande qui est passée en face du codeur (44), l'ensemble de commande transmettant des signaux de commande au guide mobile (43) en fonction du signal de longueur.

2. Machine selon la revendication 1, caractérisée en ce que l'ensemble de commande comporte un ordinateur (15) destiné à produire, dans chacun des intervalles de temps d'une série, un signal d'amplitude constante correspondant à une position parmi une série de positions nécessaires d'un guide mobile, au moins pour l'une des positions d'une série correspondante de positions autour de la circonférence du segment de piston, un processeur (16) de signaux étant destiné à former, à partir de la série de signaux d'amplitude constante, un signal continu qui varie progressivement à des intervalles de temps successifs égaux aux intervalles de temps des signaux de position, l'amplitude du signal continu étant reliée aux valeurs successives des signaux de position, et un signal continu en boucle fermée, le processeur étant destiné aussi à commander le déplacement du guide mobile au moins en fonction de ces signaux.

3. Machine selon la revendication 1 ou 2, caractérisée en ce que l'ordinateur (15) forme, pour chaque signal de longueur, un groupe de bits représentatif de la position nécessaire du guide pour ce signal, un convertisseur numérique-analogique (23) étant destiné à transformer les groupes de bits en signaux de position de guide.

FIG. 1.

Fig. 2.